# EUROPEAN PATENT APPLICATION

(11) **EP 4 535 228 A1**
(43) Date of publication of application: **09.04.2025**
(21) Application number: 24801811.1
(22) Date of filing: 23.04.2024
(51) Int. Cl.: G06K 19/06

(54) **ANTI-COUNTERFEITING CODING ELEMENT AND MANUFACTURING METHOD FOR ANTI-COUNTERFEITING CODING ELEMENT**

(30) Priority: 22.08.2023 CN 202311061937
(71) Applicant: Zhongchao Special Security Technology Co., Ltd, Beijing 100070 (CN); China Banknote Printing and Minting Corp., Beijing 100044 (CN)
(72) Inventor: YANG, Dong, Beijing 100070 (CN); SUN, Kai, Beijing 100070 (CN)
(74) Representative: Zacco GmbH
(86) International application number: PCT/CN2024/089400
(87) International publication number: WO 2025/039594

(57) **Abstract**

Provided are an anti-counterfeit coding element and a method for manufacturing the anti-counterfeit coding element. The anti-counterfeit coding element includes a substrate, the substrate having a first region, a second region and a third region; a corrugated structure layer, the corrugated structure layer being arranged on the substrate, and the corrugated structure layer being at least arranged in the first region and the third region; a first functional layer, the first functional layer being arranged in the first region, the first functional layer and the corrugated structure layer in the first region acting together to enable the first region to have an appearance varying with a viewing angle, and a difference between the first region and a second region forming a coding pattern; a second functional layer, the second functional layer being arranged in the third region, and the second functional layer and the corrugated structure layer in the third region acting together to enable the surface of the second region to have an appearance varying with an angle. The present invention solves the problem in the prior art that an anti-counterfeit coding element has a poor anti-counterfeit performance and is easily counterfeited.

## Description

The present invention claims priority to a patent application with application no. 202311061937.5, entitled "Anti-Counterfeit Coding Element and Method for Manufacturing Anti-Counterfeit Coding Element", and filed to the China National Intellectual Property Administration on August 22, 2023.

### Technical Field

The present invention relates to the technical field of anti-counterfeit devices, and in particular, to an anti-counterfeit coding element and a method for manufacturing the anti-counterfeit coding element.

### Background

The counterfeit products seriously damage the legitimate interests of product manufacturers and users. With the rapid development of economy, products in the market are more abundant and diverse, and the requirements for discerning the true and false and production links are stronger.

At present, in the fields of production, transportation, warehousing, sale, use, tracing and anti-counterfeit of products, anti-counterfeit coding elements including text, bar codes, and two-dimensional codes of product information or codes are widely used, and have the advantages of being able to be read by naked eyes or a machine and being easy to integrate; however, in the prior art, a variable coding pattern such as a text, a bar code and a two-dimensional code is realized by a variable printing device such as an ink jet, it is easy to copy directly, the cloning threshold is low, and its anti-counterfeit capability needs to be enhanced.

That is to say, in the prior art, anti-counterfeit coding elements have the problems of having a poor anti-counterfeit performance and being easily counterfeited.

### Summary

Some embodiments of the present invention provide an anti-counterfeit coding element and a method for manufacturing the anti-counterfeit coding element, so as to solve the problem in the prior art that the anti-counterfeit coding element has a poor anti-counterfeit performance and is easily counterfeited.

According to one embodiment of the present invention, an anti-counterfeit coding element is provided. The anti-counterfeit coding element includes: a substrate, the substrate having a first region, a second region and a third region; a corrugated structure layer, the corrugated structure layer being arranged on the substrate, and the corrugated structure layer being at least arranged in the first region and the third region; a first functional layer, the first functional layer being arranged in the first region, the first functional layer and the corrugated structure layer in the first region acting together to enable the first region to have an appearance varying with a viewing angle, and a difference between the first region and a second region forming a coding pattern; a second functional layer, the second functional layer being arranged in the third region, and the second functional layer and the corrugated structure layer in the third region acting together to enable the surface of the third region to have an appearance varying with an angle.

In one implementation, the appearance varying with a viewing angle includes at least one of the following: the color varying with a viewing angle, the brightness varying with a viewing angle, the pattern shape varying with a viewing angle, the pattern position varying with a viewing angle, and the pattern angle varying with a viewing angle.

In one implementation, the corrugated structure layer in the first region and the corrugated structure layer in the third region have different hollow indexes.

The hollow index of the corrugated structure layer refers to a degree of difficulty in removing a functional layer in a specific process. The higher the hollow index, the easier it is to remove the functional layer that is combined with the corrugated structure layer in a specific process. The hollow index of the corrugated structure layer depends on the structure parameters in the corrugated structure layer. The hollow index may be generally represented by structure parameters such as a structure depth, a specific area, and a specific volume.

In one implementation, the first functional layer and the second functional layer include at least one of the same materials.

In one implementation, the first functional layer and the second functional layer are of the same material.

In one implementation, light emitted by a point light source forms a render pattern after passing through the second region.

In one implementation, the first region's appearance varying with a viewing angle is associated with the third region's the appearance varying with a viewing angle.

In one implementation, the first functional layer and/or the second functional layer includes at least one of a metal layer, a medium layer, and a magnetic layer.

In one implementation, the first functional layer and/or the second functional layer is a single metal layer; or the first functional layer and/or the second functional layer is a single medium layer; or the first functional layer and/or the second functional layer is multiple medium layers; or the first functional layer and/or the second functional layer is formed by stacking the metal layer, the medium layer and the metal layer.

In one implementation, the first region and the second region have different anti-counterfeit features.

In one implementation, the difference between the first region and the second region includes at least one of a difference in appearance, a difference in light transmittance and a difference in magnetic property.

In one implementation, the code pattern includes at least one of a number, a letter, a bar code, and a two-dimensional code.

In one implementation, when there are a plurality of anti-counterfeit coding elements, the coding patterns of at least two anti-counterfeit coding elements are different.

In one implementation, the coding pattern is customizable.

In one implementation, the second region further has a corrugated structure layer, and the corrugated structure layer in the second region and the corrugated structure layer in the third region have different hollow indexes.

In one implementation, the second region is contiguously arranged around the periphery of the first region and the third region.

According to another embodiment of the present invention, a method for manufacturing an anti-counterfeit coding element is provided, the anti-counterfeit coding element is manufactured by the method for manufacturing the anti-counterfeit coding element, and the method for manufacturing the anti-counterfeit coding element includes: forming the corrugated structure layer on the substrate, wherein the hollow indexes of the first region, a part of the second region close to the first region, and the third region are less than that of a part of the second region close to the third region; forming a functional layer; forming a protective layer; after forming the protective layer, placing the structure in an atmosphere capable of reacting with the protective layer and the functional layer, until the functional layer located in the second region is partially or completely removed; after forming the functional layer, using a light beam and/or a particle beam to remove the functional layer on a part of the second region close to the first region.

By applying the technical solution of the present invention, an anti-counterfeit coding element includes the substrate, the corrugated structure layer, the first functional layer and the second functional layer, wherein the substrate has the first region, the second region and the third region; the corrugated structure layer is arranged on the substrate, and the corrugated structure layer is at least arranged in the first region and the third region; the first functional layer is arranged on the corrugated structure layer in the first region, so that the first region has an appearance varying with a viewing angle, and the difference between the first region and the second region forms a coding pattern; the second functional layer is arranged on the corrugated structure layer in the third region, such that the surface of the third region has an appearance varying with an angle.

The corrugated structure layer and the first functional layer are arranged in the first region, so that the first region has an appearance varying with a viewing angle, thereby increasing an anti-counterfeit effect. The functional layer is not arranged in the second region, so that a coding pattern is formed by the difference between the first region and the second region, thereby further increasing the anti-counterfeit effect. The corrugated structure layer and the second functional layer are arranged in the third region, such that the surface of the third region has an appearance varying with an angle, thereby further increasing the anti-counterfeit effect of an anti-counterfeit coding element. The anti-counterfeit coding element in the present invention has multiple anti-counterfeit features, effectively increases the anti-counterfeit performance of the anti-counterfeit coding element, and reduces the risk of the anti-counterfeit coding element being counterfeited.

### Brief Description of the Drawings

The drawings of the description, constituting a part of the present invention, are used for providing further understanding of the present invention, and the illustrative embodiments of the present invention and illustrations thereof are used to explain the present invention, rather than constitute inappropriate limitation on the present invention. In the drawings:
Fig. 1 shows a structural diagram of an anti-counterfeit coding element in embodiment I of the present invention;
Fig. 2 shows a structural diagram of an anti-counterfeit coding element in embodiment II of the present invention;
Fig. 3 shows a process diagram of manufacturing an anti-counterfeit coding element of embodiment III of the present invention; and
Fig. 4 shows a process diagram of manufacturing an anti-counterfeit coding element of embodiment IV of the present invention.

The figures include the following reference signs:
10, first region; 20, first functional layer; 30, second region; 50, third region; 60, corrugated structure layer; 70, second functional layer; 80, protective layer; 90, transparent layer; 100, substrate.

### Detailed Description of the Embodiments

It should be noted that the embodiments in the disclosure and features in the embodiments may be combined without conflicts. The disclosure will be described below in detail with reference to the drawings and in combination with the embodiments.

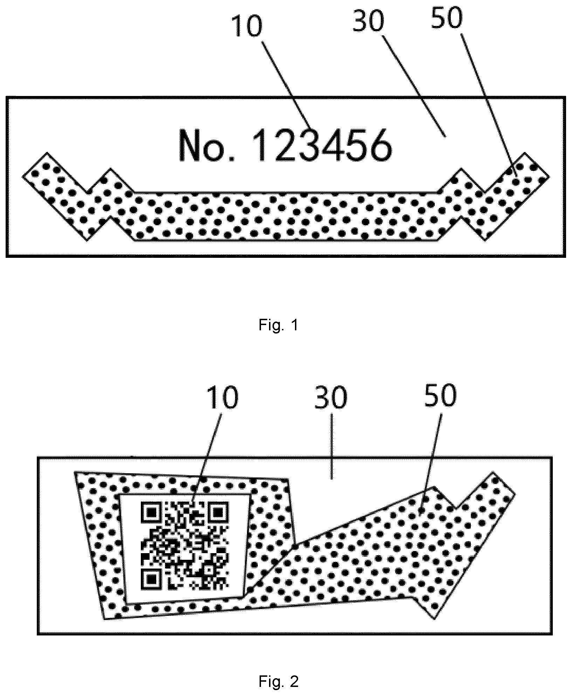

As shown in Figs. 1-4, the anti-counterfeit coding element includes a substrate 100, a corrugated structure layer 60, a first functional layer 20 and a second functional layer 70, wherein the substrate 100 has a first region 10, a second region 30 and a third region 50; the corrugated structure layer 60 is arranged on the substrate 100, and the corrugated structure layer 60 is at least arranged in the first region 10 and the third region 50; the first functional layer 20 is arranged on the corrugated structure layer 60 in the first region 10, so that the first region 10 has an appearance varying with a viewing angle, and the difference between the first region 10 and the second region 30 forms a coding pattern; the second functional layer 70 is arranged on the corrugated structure layer 60 in the third region 50, so that the surface of the third region 50 has an appearance varying with an angle.

The corrugated structure layer 60 and the first functional layer 20 are arranged in the first region 10, so that the first region 10 has an appearance varying with a viewing angle, thereby increasing an anti-counterfeit effect; and a functional layer is not arranged in the second region 30, so that the difference between the first region 10 and the second region 30 forms a coding pattern, thereby further increasing the anti-counterfeit effect. The corrugated structure layer 60 and the second functional layer 70 are arranged in the third region 50, so that the surface of the third region 50 has an appearance varying with an angle, thereby further increasing the anti-counterfeit effect of the anti-counterfeit coding element. The anti-counterfeit coding element in the present invention has multiple anti-counterfeit features, effectively increases the anti-counterfeit performance of the anti-counterfeit coding element, and reduces the risk of the anti-counterfeit coding element being counterfeited.

It should be noted that, a coding pattern is directly formed by the difference between the first region 10 and the second region 30. For example, the first region 10 has the first functional layer 20, and the second region 30 has no functional layer, so that the appearance of the first region 10 is different from that of the second region 30, so as to directly form the coding pattern.

In the present invention, due to the existence of the corrugated structure layer 60 and the first functional layer 20 and the existence of the corrugated structure layer 60 and the second functional layer 70, the appearance of the anti-counterfeit coding element varies with a viewing angle, which is significantly different from copying, printing, printing, etc., and the coding information cannot be counterfeited or manufactured by conventional means.

In the third region 50, the corrugated structure layer 60 and the second functional layer 70 are precisely aligned, that is to say, the relative position deviation is less than 10 microns.

Specifically, the appearance varying with a viewing angle includes at least one of the following: the color varying with a viewing angle, the brightness varying with a viewing angle, the pattern shape varying with a viewing angle, the pattern position varying with a viewing angle, and the pattern angle varying with a viewing angle.

In the present invention, the appearance varying with a viewing angle includes at least one optical anti-counterfeit feature of holography, optical variability, dynamic, embossing, micro-lens, etc.

The appearance of the first region 10 of the present invention, which varies with a viewing angle, is an appearance feature formed by the corrugated structure layer 60 and the first functional layer 20. The appearance of the third region 50, which varies with a viewing angle, is an appearance feature formed by the corrugated structure layer 60 and the second functional layer 70. In addition, the combination of a fluctuation structure and a functional layer can integrate conventional anti-counterfeit technologies, for example, a diffraction-based optical anti-counterfeit technology such as hologram, a reflection-based optical anti-counterfeit technology such as a micro-mirror, a sub-wavelength micro-structure-based optical anti-counterfeit technology such as schemochrome, etc.

Specifically, the corrugated structure layer 60 in the first region 10 and the corrugated structure layer 60 in the third region 50 have different hollow indexes. In the present embodiment, the first region 10 and the corrugated structure layer 60 are not precisely aligned, that is to say, the deviation of the relative position cannot be controlled within a range less than 10 microns, and generally, the deviation of the relative position of the non-precise alignment is less than 1 millimeter.

Specifically, the hollow index of the corrugated structure layer 60 refers to a degree of difficulty in removing a functional layer in a specific process. The higher the hollow index, the easier it is to remove the functional layer that is combined with the corrugated structure layer 60 in a specific process. The hollow index of the corrugated structure layer 60 depends on the structure parameters in the corrugated structure layer 60. The hollow index may be generally represented by structure parameters such as a structure depth, a specific area, and a specific volume.

In one implementation, the first functional layer 20 and the second functional layer 70 include at least one of the same material. Part of materials of the first functional layer 20 and the second functional layer 70 may be the same, so that the first functional layer 20 and the second functional layer 70 have similar functions.

In one implementation, the first functional layer 20 and the second functional layer 70 are of the same material. In this way, the first functional layer 20 and the second functional layer 70 have the same functions, and the manufacturing of the first functional layer 20 and the second functional layer 70 is facilitated.

Specifically, the boundary of the second functional layer 70 is the boundary of the third region 50. That is to say, all positions in the third region 50 have the corrugated structure layer 60 and the second functional layer 70, so as to ensure the consistency of the appearance features in the third region 50, so that the shape of the third region 50 serves as a anti-counterfeiting feature.

In one implementation, the first functional layer 20 and the second functional layer 70 are formed in the same process. In this way, the processing steps are reduced, so that the first functional layer 20 and the second functional layer 70 are formed at the same time, thereby reducing production costs.

In the present invention, light emitted by a point light source forms a render pattern after passing through the second region 30.

In one optional embodiment, when the light emitted by the point light source illuminates the second region 30, when the human eyes view the point light source through the second region 30, the render pattern is viewed directly in the visual field of the human eyes.

In one optional embodiment, when the light emitted by the point light source illuminates the second region 30, the light projects a render pattern onto the object after passing through or being reflected.

In the present invention, the first region 10's appearance varying with a viewing angle is associated with the third region 50's the appearance varying with a viewing angle. The appearance of the first region 10 being associated with the appearance of the third region 50 means that the appearances of the two vary synchronously, for example, the positions of two vary synchronously, the colors of the two vary synchronously, the pattern shapes of the two vary synchronously, the pattern angles of the two vary synchronously, etc.

In one implementation, the first functional layer 20 includes at least one of a metal layer, a medium layer, and a magnetic layer.

In one implementation, the second functional layer 70 includes at least one of a metal layer, a medium layer, and a magnetic layer.

Specifically, the first functional layer 20 may be a single metal layer, a single medium layer, and a single magnetic layer, and may also be formed by alternately stacking a metal layer and a medium layer, for example, a metal layer-a medium layer-a metal layer, and may also be formed by alternately stacking multiple medium layers, for example, a high-refractive-index medium layer and a low-refractive-index medium layer.

When the first functional layer 20 and/or the second functional layer 70 are "a metal layer-a medium layer-a metal layer", an optically variable feature is formed. The optically variable feature can view different colors at different viewing angles, and has the effect of varying the color with a viewing angle.

The optically variable feature is also formed when the first functional layer 20 and/or the second functional layer 70 is formed by alternately stacking the high-refractive-index medium layer and the low-refractive-index medium layer.

Specifically, the second functional layer 70 is a single metal layer, a single medium layer, and a single magnetic layer, and may also be formed by alternately stacking a metal layer and a medium layer, for example, a metal layer-a medium layer-a metal layer, and may also be formed by alternately stacking multiple medium layers, for example, a high-refractive-index medium layer and a low-refractive-index medium layer.

The single metal layer is an aluminum plating layer.

In one implementation, the first functional layer 20 may also include a reflective layer.

In one implementation, the second functional layer 70 may also include a reflective layer.

In the present invention, the first region 10 and the second region 30 have different anti-counterfeit features. That is to say, the anti-counterfeit features of the first region 10 are different from the anti-counterfeit features of the second region 30, so that the anti-counterfeit coding element has diversified anti-counterfeit features.

In one implementation, the difference between the first region 10 and the second region 30 includes at least one of a difference in appearance, a difference in light transmittance and a difference in magnetic property.

The difference between the appearances of the first region 10 and the second region 30 may be a difference in appearance features such as the shape, color, brightness and gloss of the first region 10 and the second region 30, and certainly, the presence of even a single difference in appearance features indicates that the appearance of the first region 10 is different from that of the second region 30. For example, the first region 10 has a metallic appearance, while the second region 30 has a transparent appearance, it indicates that the two have different appearances.

Specifically, the difference in appearances between the first region 10 and the second region 30 is mainly caused by the presence or absence of a functional layer. In the present invention, the first region 10 has a first functional layer 20, while the second region 30 has no functional layer. Since the first region 10 has the first functional layer 20, when the first functional layer 20 is directly arranged on a flat surface, the appearance of the first region 10 is a mirror effect or a similar mirror effect; when the first functional layer 20 is directly arranged on the corrugated surface, the appearance of the first region 10 may show different brightness and/or color distribution depending on a viewing angle; when the first functional layer 20 is two or multiple plating layers, the appearance of the first region 10 may in different colors depending on the viewing angle. The second region 30 has no functional layer, and thus the second region 30 has a transparent appearance or an appearance below the corrugated structure layer.

When the difference between the first region 10 and the second region 30 is a difference in light transmittance, it means that the first region 10 and the second region 30 have different light transmission properties when being viewed in transmission, and the coding pattern can be seen. Viewed in transmission means that the viewing position and the light source are on different sides of the anti-counterfeit coding element.

When the difference between the first region 10 and the second region 30 is a difference in magnetic property, the coding patterns, obtained by the respective magnetic equipment sides, of the first region 10 and the second region 30 are different.

Specifically, the code pattern includes at least one of a number, a letter, a bar code, and a two-dimensional code. The two-dimensional code may be a common two-dimensional code, and may also be a quick response (QR) code.

Specifically, when there are a plurality of anti-counterfeit coding elements, the coding patterns of at least two anti-counterfeit coding elements are different. When manufacturing an anti-counterfeit coding element, a plurality of anti-counterfeit coding elements are manufactured together on the same substrate 100, the coding patterns of at least two anti-counterfeit coding elements are different during manufacturing, and certainly, the coding patterns of a plurality of anti-counterfeit coding elements also may be different, since the coding pattern is only caused by the presence or absence of the functional layer between the first region 10 and the second region 30, the manufacturing difficulty of the anti-counterfeit coding element is not increased.

In one implementation, the coding pattern is customizable. The coding pattern is a tailored pattern designed according to specific requirements. Certainly, each coding pattern is unique.

It should be noted that, the coding pattern being customizable includes the case that the same batch of anti-counterfeiting coding elements has different coding patterns.

In one optional embodiment, the first functional layer 20 in the first region 10 is arranged directly on the substrate 100, or the corrugated structure layer 60 is only in the third region 50. Furthermore, the first functional layer 20 and the second functional layer 70 are the same structure layer.

In another optional embodiment, the second region 30 further includes a corrugated structure layer 60, and the corrugated structure layer 60 in the second region 30 and the corrugated structure layer 60 in the third region 50 have different hollow indexes.

In one implementation, when the corrugated structure layer 60 is a periodic stripe corrugated structure, the corrugated structure layer 60 cooperates with the first functional layer 20 and/or the second functional layer 70, which can form a holographic feature. The holographic feature can view blazed rainbow colors at a specific angle, and the rainbow colors refer to that when the viewing angle is changed slightly, rapid change of color is viewed. The holographic feature has the effects of varying the color with a viewing angle, and varying the brightness distribution with a viewing angle.

A series of reflective surfaces having a specific feature orientation are formed in the first region 10 and/or the third region 50, or a series of holographic strips having a specific period and orientation are combined to form a dynamic feature and/or an embossing effect. The dynamic effect and/or embossing effect can view different brightness distributions at different viewing angles, and these brightness distributions can also form a pattern, and the pattern presents different shapes, sizes and angles at different viewing angles. The dynamic effect and/or embossing effect has the effects of a brightness distribution varying with a viewing angle, a pattern shape varying with a viewing angle, a pattern position varying with a viewing angle, a pattern angle varying with a viewing angle.

In one optional embodiment, the anti-counterfeit coding element further includes a sampling layer, the sampling layer is arranged on the first functional layer 20 and the second functional layer 70, and the sampling layer can sample patterns on the first functional layer 20 and the second functional layer 70 to form a micro-lens feature. The micro-lens feature has effects of a pattern shape varying with a viewing angle, a pattern position varying with a viewing angle, and a pattern angle varying with a viewing angle.

In the embodiment shown in Fig. 1, the second region 30 is contiguously arranged around the periphery of the first region 10 and the third region 50.

In the present invention, the anti-counterfeit coding element is manufactured by the method for manufacturing an anti-counterfeit coding element, and the method for manufacturing the anti-counterfeit coding element includes: forming a corrugated structure layer 60 on a substrate 100, wherein the hollow indexes of a first region 10, a part of a second region 30 close to the first region 10, and a third region 50 are less than that of a part of the second region 30 close to the third region 50; forming a functional layer; forming a protective layer 80; after forming the protective layer 80, placing the structure in an atmosphere capable of reacting with the protective layer 80 and the functional layer, until the functional layer located in the second region 30 is partially or completely removed; after forming the functional layer, using a light beam and/or a particle beam to remove the functional layer on a part of the second region 30 close to the first region 10.

### Embodiment I

In the embodiment shown in Fig. 1, the anti-counterfeit coding element includes a first region 10, a second region 30 and a third region 50, and the coding pattern is a combination of letters and numbers.

### Embodiment II

In the embodiment shown in Fig. 2, the anti-counterfeit coding element includes a first region 10, a second region 30 and a third region 50, and the coding pattern is a two-dimensional code.

### Embodiment III

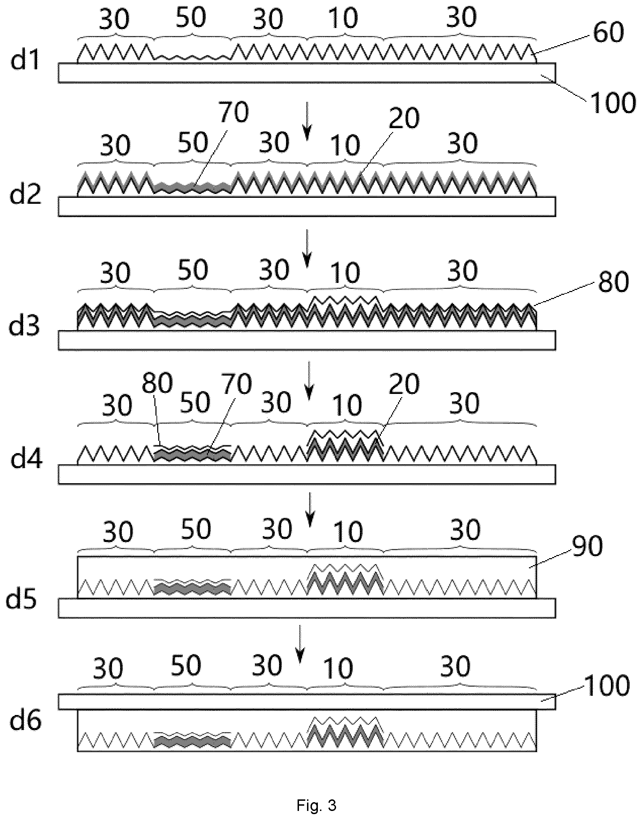

In the embodiment shown in Fig. 3, as an example for illustration, provided is a manufacturing method for a structure, wherein all of the first region 10, the second region 30 and the third region 50 have the corrugated structure layer 60, and the first functional layer 20 in the first region 10 and the second functional layer 70 in the third region 50 are the same layer. Meanwhile, for ease of description, the first functional layer 20 and the second functional layer 70 are collectively referred to as functional layers. First, the first region 10, the second region 30 and the third region 50 are divided on the substrate 100.
step d1: a corrugated structure layer 60 is formed on a substrate 100, wherein the hollow index of the corrugated structure layer 60 in the third region 50 is less than the hollow index of the corrugated structure layer 60 in the second region 30;
step d2: a functional layer is formed on the starting structure layer 60;
step d3: a protective layer 80 is formed on the functional layer, wherein the thickness of the protective layer 80 in the first region 10 is greater than the thickness of the protective layer 80 in the second region 30 and the third region 50;
step d4: the described structure is placed in an atmosphere capable of reacting with the functional layer until the functional layer located in the second region 30 is partially or completely removed;
step d5: a transparent layer 90 is attached, wherein the transparent layer 90 is a transparent thin film or a transparent coating;
step d6: it is transferred onto the other substrates 100.

The protective layer 80 may be manufactured once or twice. When manufacturing the protective layer 80 twice, a protective layer 80 with a uniform thickness is formed on all regions, and then a protective layer 80 is additionally formed on the first region 10. An additional layer can also be formed on the first region 10, and then the protective layer 80 is formed on all of the regions. The advantage of manufacturing once is having fewer processes, while the advantages of manufacturing twice is that the advantages of different technologies may be taken, for example, a method of printing and coating may be used to form the protective layer 80 on all regions, so as to achieve the advantage of high coating efficiency, and a digital printing technology such as ink-jet may be for additional coating on the first region 10, so as to achieve the advantage of customizable digital printing.

The protective layer 80 in the first region 10 is thicker than the protective layer 80 in other regions. In practical implementation, it may be faced with a printing alignment problem, so that it is difficult to precisely align the position of the first region 10 with the micro-structure on the corrugated structure layer 60.

The hollow index of the corrugated structure layer 60 in the third region 50 is smaller than the hollow index of the corrugated structure layer 60 in the second region 30. The second region 30 has a larger hollow index, and thus the functional layer on the second region 30 may be removed.

The functional layer is retained by the third region 50 due to the influence of the hollow index of the corrugated structure layer 60, and the position of the third region 50 is precisely aligned with the micro-structure on the corrugated structure layer 60.

Since the corrugated structures of the first region 10 and the third region 50 are formed by copying the same original version, and the corrugated structures of the first region 10 and the third region 50 have an accurate position association, in the present embodiment, the appearance of the first region 10 varying with a viewing angle is associated with the appearance of the third region 50 varying with a viewing angle, and these associations include the relative positions, a relative brightness relationship, etc. of the patterns.

### Embodiment IV

The difference between embodiment IV and embodiment III is that some steps of the manufacturing method are different.

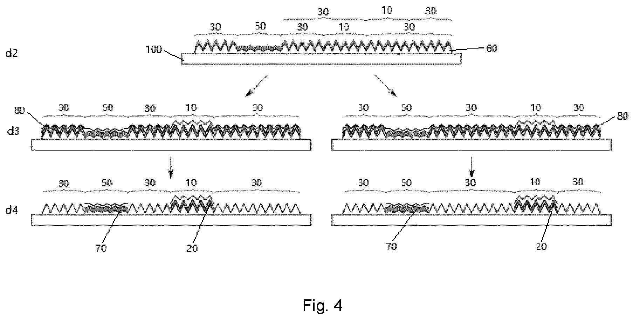

In the embodiment shown in Fig. 4, since the same original version and the same method for manufacturing a functional layer are used, after the functional layer is formed after step d2, the semi-finished products of different anti-counterfeit coding elements are the same.

Step d3: when the protective layer 80 is formed, the protective layer 80 of the first region 10 is thicker, and the first regions 10 of different anti-counterfeit coding elements have different shapes; therefore, after step d3, the thickened regions of the protective layer 80 also have different shapes correspondingly.
step d4: the described structure is placed in an atmosphere capable of reacting with the functional layer until the functional layer located in the second region 30 is partially or completely removed. Since the first region 10 has a thicker protective layer 80, the functional layer is retained, different anti-counterfeit coding elements have first regions 10 of different shapes, and correspondingly, the shapes of the first functional layers 20 are also different, and the formed readable elements have different coding information. As the parameters of the micro-structure are conducive to the effective functioning of the thinner protective layer 80, the third region 50 is also retained., and therefore the shape of the third region 50 is determined by the original version of the embossing structure, and different anti-counterfeit coding elements have the same third region 50. The second region 30 is removed by a reaction, so as to form a hollowed appearance.

It should be noted that, the content above merely relates to preferred embodiments of the present invention and is not intended to limit the present invention. For a person skilled in the art, the present invention may have various modifications and variations. Any modifications, equivalent replacements, improvements, etc. made within the spirit and principle of the present invention shall all belong to the scope of protection of the present invention.

## Claims

1. An anti-counterfeit coding element, comprising:
a substrate (100) having a first region (10), a second region (30), and a third region (50);
a corrugated structure layer (60) arranged on the substrate and at least arranged in the first region (10) and the third region (50);
a first functional layer (20), the first functional layer (20) being arranged in the first region (10) to enable the first region has an appearance varying with a viewing angle, and a difference between the first region (10) and the second region (30) forming a coding pattern; and
a second functional layer (70), the second functional layer (70) arranged in the third region (50) to enable the surface of the third region (50) to have an appearance varying with an angle.

2. The anti-counterfeit coding element as claimed in claim 1, wherein the appearance varying with a viewing angle comprises at least one of the following: the color varying with a viewing angle, the brightness varying with a viewing angle, the pattern shape varying with a viewing angle, the pattern position varying with a viewing angle, and the pattern angle varying with a viewing angle.

3. The anti-counterfeit coding element as claimed in claim 1, wherein the corrugated structure layer (60) in the first region (10) and the corrugated structure layer (60) in the third region (50) have different hollow indexes.

4. The anti-counterfeit coding element as claimed in claim 1, wherein the first functional layer (20) and the second functional layer (70) comprise at least one of the same material.

5. The anti-counterfeit coding element as claimed in claim 4, wherein the first functional layer (20) and the second functional layer (70) are made of the same material.

6. The anti-counterfeit coding element as claimed in claim 1, wherein light emitted by a point light source forms a render pattern after passing through the second region (30).

7. The anti-counterfeit coding element as claimed in claim 1, wherein the first region (10)'s appearance varying with a viewing angle is associated with the third region (50)'s the appearance varying with a viewing angle.

8. The anti-counterfeit coding element as claimed in claim 1, wherein the first functional layer (20) and/or the second functional layer (70) comprises at least one of a metal layer, a medium layer and a magnetic layer.

9. The anti-counterfeit coding element as claimed in claim 8, wherein
the first functional layer (20) and/or the second functional layer (70) is a single metal layer; or
the first functional layer (20) and/or the second functional layer (70) is a single medium layer; or
the first functional layer (20) and/or the second functional layer (70) is multiple medium layers; or
the first functional layer (20) and/or the second functional layer (70) is formed by stacking the metal layer, the medium layer and the metal layer.

10. The anti-counterfeit coding element as claimed in claim 1, wherein the first region (10) and the second region (30) have different anti-counterfeit features.

11. The anti-counterfeit coding element as claimed in claim 10, wherein the difference between the first region (10) and the second region (30) comprises at least one of a difference in appearance, a difference in light transmittance and a difference in magnetic property.

12. The anti-counterfeit coding element as claimed in any one of claims 1 to 11, wherein the code pattern comprises at least one of a number, a letter, a bar code, and a two-dimensional code.

13. The anti-counterfeit coding element as claimed in claim 1, wherein when there are a plurality of anti-counterfeit coding elements, the coding patterns of at least two anti-counterfeit coding elements are different.

14. The anti-counterfeit coding element as claimed in claim 13, wherein the coding pattern is customizable.

15. The anti-counterfeit coding element as claimed in any one of claims 1 to 11, wherein the second region (30) further has the corrugated structure layer (60), and the corrugated structure layer (60) in the second region (30) and the corrugated structure layer (60) in the third region (50) have different hollow indexes.

16. The anti-counterfeit coding element as claimed in any one of claims 1 to 11, wherein the second region (30) is arranged continuously around a periphery of the first region (10) and the third region (50).

17. A method for manufacturing an anti-counterfeit coding element, wherein the anti-counterfeit coding element of any one of claims 1 to 16 is manufactured by using the method for manufacturing the anti-counterfeit coding element, and the method for manufacturing the anti-counterfeit coding element comprises:
forming the corrugated structure layer (60) on the substrate (100), wherein the hollow indexes of the first region (10), a part of the second region (30) close to the first region (10), and the third region (50) are less than that of a part of the second region (30) close to the third region (50);
forming a functional layer;
forming a protective layer (80);
after forming the protective layer (80), placing the structure in an atmosphere capable of reacting with the protective layer (80) and the functional layer, until the functional layer located in the second region (30) is partially or completely removed;
after forming the functional layer, using a light beam and/or a particle beam to remove the functional layer on a part of the second region (30) close to the first region (10).
